# EUROPEAN PATENT SPECIFICATION

(11) **EP 2 551 490 B1**
(45) Date of publication and mention of the grant of the patent: **26.10.2016**
(21) Application number: 12175327.1
(22) Date of filing: 06.07.2012
(51) Int. Cl.: F02C 7/143, F02C 3/30, F04D 29/58

(54) **Axial compressor with an injection device for injecting a fluid**
Axialkompressor mit einer Einspritzvorrichtung zum Einspritzen einer Flüssigkeit
Compresseur axial avec dispositif d'injection permettant d'injecter un fluide

(30) Priority: 25.07.2011 CH 12372011
(43) Date of publication of application: 30.01.2013
(73) Proprietor: General Electric Technology GmbH, 5400 Baden (CH)
(72) Inventor: Puerta, Luis, 5415 Rieden (CH); Micheli, Marco, 8156 Schöfflisdorf (CH); Kappis, Wolfgang, 5442 Fislisbach (CH); Dunkel, Gabriel, 5242 Birr (CH)
(74) Representative: Bernotti, Andrea

(56) References cited:
- US-A- 4 711 084
- US-A- 5 351 478
- US-A1- 2005 141 991
- US-B2- 6 644 935
- US-B2- 6 935 119

## Description

### Technical field

The present invention refers to an axial compressor according to the preamble of claim 1. It furthermore refers to a method for producing an axial compressor and also to a gas turbine with such an axial compressor.

### Background of the invention

In the case of axial compressors, as are used in particular as a component in gas turbines, it is frequently desired to inject a fluid, especially water, into the gas passage, in which the compression takes place, in order to influence the thermodynamic process being carried out. With such injection, consideration has to be given to constructional characteristic features and geometric relationships in the axial compressor if extensive and costly modifications and adjustments in the structure of the axial compressor are to be avoided.

A compressor, in which for cooling the rotor shaft cooling air is blown through discharge openings in the blade tips of stator blades against the rotor shaft, is known from printed publication EP 0 984 138. Such a configuration is not suitable for injecting a fluid into the gas flow and requires a special design of the stator blades.

In printed publication US 6,644,935, it is proposed to inject a fluid into the gas flow for improving the efficiency in an axial compressor. To this end, use is made of radially oriented nozzles which are accommodated directly in a bore in the casing of the compressor. Such a direct arrangement, with access from the outside, in a casing wall is possible only in the case of compressors of which the casing structure is particularly simple. If, on the other hand, bleed air chambers and corresponding bleed air flanges are provided in the compressor, such a nozzle arrangement can no longer be readily realized. Furthermore, sealing problems occur, and also problems of mechanical and thermal strength.

Printed publication US 7,033,135 proposes to inject a fluid into the gas flow of a turbomachine through openings arranged in a distributed manner in the radial direction on the trailing edge of a stator blade. For connecting the stator blade to a fluid feed, the casing has to be expensively machined on the inside. Furthermore, the injecting of fluid in the flow direction is not particularly advantageous for the mixing of gas and fluid mist.

Document US 6 935 119 B2 relates to a method for operating gas turbine engines including a high pressure compressor with variable inlet guide vanes and a water injection apparatus for injecting water into the flow of the engine. One embodiment shows a two staged compressor unit consisting of a low pressure compressor and a high pressure compressor between which spray nozzles are arranged to inject water into the compressor air. At the high pressure compressor additional bleed air is supplied into the compressor gas channel separately.

### Summary of the Invention

The invention should provide a remedy for this. It is therefore an object of the invention to create an axial compressor which avoids the quoted disadvantages of known solutions and in a simple and easily realizable manner enables the effective injection of fluid into the gas flow, and to disclose a method for its production.

These and other objects are achieved by means of the features of claims 1 and 11.

The invention is based on an axial compressor for compressing air, especially for a gas turbine, which axial compressor comprises a rotor, which is rotatable around a machine axis, having a multiplicity of rotor blades, and also a casing enclosing the rotor concentrically and at a distance, which casing together with the rotor forms an annular gas passage and outside the gas passage has at least one annular and concentric bleed air chamber which is in communication with the gas passage by means of at least one, preferably annular and concentric, bleed air slot.

The invention is distinguished by the axial compressor being equipped with at least one injection device for injecting a fluid, especially water, by the at least one injection device comprising at least one nozzle, preferably a multiplicity of nozzles which, distributed over the circumference, inject the fluid into the gas passage via a bleed air slot. The at least one injection device comprising in a preferred embodiment first means for feeding and distributing fluid or water to the individual nozzles which are arranged in the bleed air chamber which is associated with the bleed air slot, and by the first means being supplied from the outside with the fluid via a connecting flange which is attached on the casing.

One development of the axial compressor according to the invention is characterized in that the nozzles are arranged in the bleed air slot. By using the existing bleed air slot as an opening for accommodating the nozzles, the machining of the casing which is required for the injection is drastically reduced in extent. At the same time, access to the nozzles from the bleed air chambers which are arranged behind the bleed air slots is given in a simple manner.

The bleed air slots are customarily arranged at an angle to the flow direction so that the gas flow can be tapped off in a better way. This can be advantageously utilized for a development of the invention which Is characterized In that the nozzles are oriented by their nozzle axis towards the machine axis and in the flow direction are arranged in a tilted manner from the radial direction in such a way that the fluid is injected against the flow in the gas passage.

Another development of the invention is distinguished by the first means comprising a pipe bend which extends through the bleed air chamber transversely to the flow direction, and on which the nozzles are fastened. By combining pipe bends and nozzles to form a module, a constructional simplification of the arrangement is achieved and at the same time the mechanical stability of the arrangement is ensured.

A further simplification results from the fact that according to another development the pipe bend is fastened on an inner wall of the bleed air chamber, and the pipe bend is connected to the connecting flange via a flexible connecting hose. As a result of this, a decoupling between the nozzles or the pipe bend and the outer side of the casing is achieved, allowing thermal expansions and creating few problems with regard to sealing.

If the casing is split in a horizontal parting plane into an upper casing half and a lower casing half, the injection device is advantageously split corresponding to the casing into an upper injection device and a lower injection device, wherein a separate connecting flange is preferably associated in each case with the upper injection device and the lower injection device. As a result of this, assembly and disassembly of the machine is greatly simplified.

This is particularly applicable when the first means comprise in each case a semi-circular pipe bend for the upper injection device and for the lower injection device, which extends through the bleed air chamber transversely to the flow direction, and on which the nozzles are fastened.

According to another development of the invention - if corresponding bleed air chambers and bleed air slots are available - a plurality of injection devices of the same type can be arranged in series in the axial direction. The injection process can thus be adapted to the thermodynamic requirements in an even better and more flexible manner.

The method according to the invention for producing an axial compressor according to the invention, which has a casing which is split in a horizontal parting plane into an upper casing half and a lower casing half, is distinguished by the connecting flange, or flanges, being attached on the casing in a first step, by support elements for the first means being attached on an inner wall of the bleed air chamber in another step, and by the first means, with the nozzles fixedly arranged thereupon, being fastened on the support elements in a further step.

The gas turbine according to the invention is equipped with an axial compressor according to the invention.

### Brief explanation of the figures

The invention shall subsequently be explained in more detail based on exemplary embodiments in conjunction with the drawing. All elements which are not required for the direct understanding of the invention have been omitted. In the drawing
- Fig. 1: shows in a detail an axial compressor having injection devices for injecting a fluid into the gas passage according to an exemplary embodiment of the invention;
- Fig. 2: shows in an enlarged detail from Fig. 1 characteristic features of an injection device, and
- Fig. 3: as seen in the axial direction, shows the arrangement of the injection devices in an axial compressor according to the invention with a split casing.

### Ways of implementing the invention

The invention comprises an axial compressor, particularly for a gas turbine, having a device for introducing or injecting a fluid into the gas passage, and also a method for its production.

The injection device comprises a nozzle arrangement for injecting the fluid, corresponding pipe bends for distribution of the fluid to the nozzles, and also devices for fastening the device on the gas passage. Furthermore, provision is made for flexible connecting hoses and connecting flanges on the casing of the axial compressor, via which the fluid can be supplied from the outside. The nozzles are arranged in the bleed air slots which are provided in the axial compressor and spray the fluid in a conical spray mist in a direction opposite to the main gas flow. The spray angle of the injected fluid jet brings about a finely distributed mist over the entire height of the flow passage.

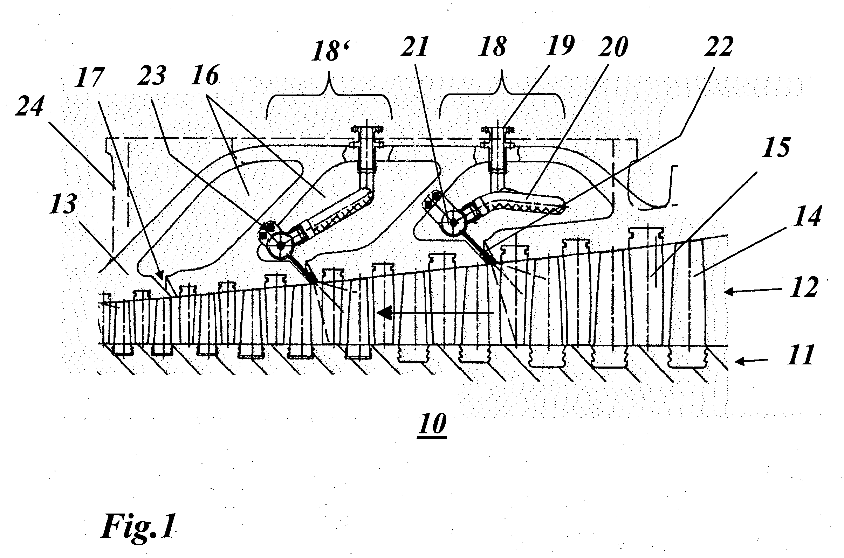

Reproduced in Fig. 1, in a detail, is an axial compressor with injection devices for injecting a fluid into the gas passage according to an exemplary embodiment of the invention. The axial compressor 10 has a central rotor 11 which carries a multiplicity of rotor blades 14 which are radially oriented and project into an annular gas passage 12 which tapers in cross section. The rotor blades 14 alternate in the gas passage 12 with stator blades 15 which are attached on the inner side of a casing 13 which concentrically encloses the rotor 11. The positioning of the rotor blades 14 is selected so that during corresponding rotation of the rotor 11 the gas in the gas passage 12, coming from the right in the direction of the drawn-in arrow, flows to the left and is compressed in the process.

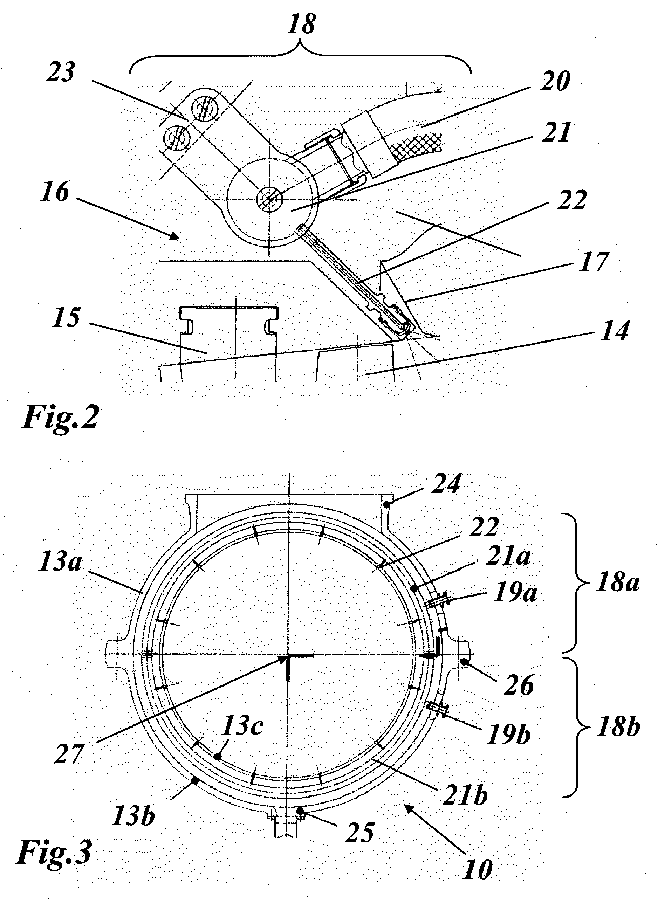

A plurality of encompassing bleed air chambers 16, adjoining the gas passage 12 on the outside, are formed in the casing 13 of the axial compressor 10 and are in communication with the gas passage 12 via encompassing bleed air slots 17 which are inclined in the flow direction. Via the bleed air slots 17, compressed air flows into the adjoining bleed air chambers 16 during operation and from there, via bleed air flanges 24 (and 25 in Fig. 3) which are arranged on the outside on the axial compressor 10, is discharged for further utilization.

According to the invention, the bleed air chambers 16 constitute suitable spaces in order to accommodate, at little cost, the injection devices 18 or 18' which are required for injecting a fluid. At the same time, the associated bleed air slots 17, from their design and inclination, are particularly well suited to accommodating the associated nozzles 22. As a result of the optimum utilization of the spaces already existing in the casing 13, the cost which is incurred in the machining of the casing 13 for the injection devices 18a, b can be kept exceptionally low.

According to Figs. 1 - 3, for forming the injection devices 18, 18' pipe bends 21 or 21 a, b are fastened in each case on an inner wall of the bleed air chambers 16 by means of suitable support elements 23, from which pipe bends the nozzles 22, distributed over the circumference, project into the associated bleed air slots 17 to such an extent that the tips of the nozzles 22 end on the outer edge of the gas passage 12 or on the casing inner wall (13c in Fig. 3) (see Fig. 2). The pipe bends 21 or 21 a, b are connected via flexible connecting hoses 20 to corresponding connecting flanges 19 or 19a, b which project from the outside through the outer casing wall into the bleed air chambers 16.

As it is apparent from Fig. 3, the injection devices 18, 18' - if the casing 13 of the axial compressor 10 is splittable into an upper casing half 13a and a lower casing half 13b in a parting plane, passing through the machine axis 27, on a casing flange 26 - are also split into an upper injection device 18a and a lower injection device 18b with semi-circular upper and lower pipe bends 21 a and 21 b in each case and also associated upper and lower connecting flanges 19a and 19b.

In the case of the method for producing such an axial compressor with injection devices, the outer compressor casing is mechanically machined in order to attach the connecting flanges 19 or 19a, b. Furthermore, the casing is machined in the parting plane in order to attach the support elements 23 for the pipe bends 21 or 21 a, b. Finally, the semi-circular pipe bends 21 a, b can be installed with the nozzles 22 arranged thereupon.

The injection devices therefore comprise two semi-circular pipe bends in a concentric bleed air chamber with a multiplicity of nozzles which are arranged along the pipe axis. The nozzles are directed into the associated bleed air slot which is normally positioned directly after a stator blade row and in front of a rotor blade row in the flow direction (see the injection devices 18, 18' in Fig. 1). Each of the pipe bends is connected by means of a flexible connecting hose to a corresponding connecting flange passing through the casing, through which pipe bend the fluid is introduced. The nozzles create a fine spray mist in the shape of a cone which is oriented against the flow direction and covers the entire height of the gas passage (see Fig. 1).

Using the invention, the following advantages result overall:
- The casing of the axial compressor has to be only slightly altered for the injection devices;
- No two casing walls with adjoining seal have to be drilled through for the nozzles;
- The semi-circular pipe shapes are compatible with the design of the outer casing;
- The regions between the stator blades and rotor blades do not have to be modified;
- If stator blades are exchanged, the injection devices do not have to be removed;
- The external pipe connections do not have to be disassembled if the upper casing half is removed;
- The number of nozzles can be varied (e.g. when extending an injection device) without the stator blades having to be altered; and
- The position of the nozzles can be adapted so that they inject the fluid between the stator blades, especially if the number of stator blades is altered when modifying the compressor.

### List of designations

- 10: Axial compressor
- 11: Rotor
- 12: Gas passage
- 13: Casing
- 13a, b: Casing half
- 13c: Casing inner wall
- 14: Rotor blade
- 15: Stator blade
- 16: Bleed air chamber
- 17: Bleed air slot
- 18, 18', 18a, b Injection: device
- 19, 19a, b: Connecting flange
- 20: Connecting hose
- 21, 21 a, b: Pipe bend
- 22: Nozzle
- 23: Support element
- 24, 25: Bleed air flange
- 26: Casing flange
- 27: Machine axis

## Claims

1. An axial compressor (10) for compressing air, particularly for a gas turbine, which axial compressor (10) comprises a rotor (11), which is rotatable around a machine axis (27), having a multiplicity of rotor blades (14) and also a casing (13, 13a, b) enclosing the rotor (11) concentrically and at a distance, which casing (13, 13a, b) together with the rotor (11) forms an annular gas passage (12) and outside the gas passage (12) has at least one essentially annular and concentric bleed air chamber (16), wherein the bleed air chamber has at least one bleed air slot (17), wherein the slot is in functional communication with the gas passage (12), wherein the axial compressor (10) is equipped with at least one injection device (18; 18', 18a, b) for injecting a fluid, which comprises at least one nozzle (22), **characterized in that** the at least one nozzle (22) is configured to inject the fluid into the gas passage (12) via the bleed air slot (17).

2. The axial compressor as claimed in claim 1, **characterized in that** the bleed air slot (17) is of an annular and concentric design, **in that** the injection device has a number of nozzles (22) which are distributed over the circumference of the bleed air slot (17) for supplying and distributing the fluid into the gas passage (12).

3. The axial compressor as claimed in claim 1 or 2, **characterized in that** at least one injection device (18; 18', 18a, b) comprises first means (20, 21, 21a, b) for supplying and distributing the fluid to the nozzle (22) which is arranged in the bleed air chamber (16) associated with the bleed air slot (17), and **in that** the first means (20, 21, 21a, b) has a connecting flange (19, 19a, b) attached on the casing (13, 13a, b), which supplies the injection device with the fluid from the outside.

4. The axial compressor as claimed in one of claims 1 to 3, **characterized in that** the nozzles (22) are arranged in the bleed air slot (17).

5. The axial compressor as claimed in one of claims 1 to 4, **characterized in that** the nozzles (22) are oriented with their nozzle axis towards the machine axis (27) and in the flow direction are arranged in a tilted manner from the radial direction in such a way that the fluid is injected against the flow in the gas passage (12).

6. The axial compressor as claimed in one of claims 1 to 5, **characterized in that** the first means (20, 21, 21a, b) comprise a pipe bend (21, 21a, b) which extends through the bleed air chamber (16) transversely to the flow direction, and on which the nozzles (22) are fastened.

7. The axial compressor as claimed in claim 6, **characterized in that** the pipe bend (21, 21a, b) is fastened on an inner wall of the bleed air chamber (16), and **in that** the pipe bend (21, 21a, b) is connected to the connecting flange (19, 19a, b) via a flexible connecting hose (20).

8. The axial compressor as claimed in one of claims 1 to 7, **characterized in that** the casing (13) is split in a horizontal parting plane into an upper casing half (13a) and a lower casing half (13b), **in that** the injection device (18; 18', 18a, b) is split corresponding to the casing (13) into an upper injection device (18a) and a lower injection device (18b), and **in that** a separate connecting flange (19a or 19b) is associated in each case with the upper injection device (18a) and the lower injection device (18b).

9. The axial compressor as claimed in claim 8, **characterized in that** the first means (20, 21, 21 a, b) comprise in each case a semi-circular pipe bend (21 a, b) for the upper injection device (18a) and for the lower injection device (18b), which extends through the bleed air chamber (16) transversely to the flow direction, and on which the nozzles (22) are fastened.

10. The axial compressor as claimed in one of claims 1 to 9, **characterized in that** a plurality of injection devices (18, 18') of the same type are arranged in series in the axial direction.

11. A method for producing an axial compressor as claimed in claims 8 or 9, comprising the following steps:
- providing a casing (13) which is split in a horizontal parting line into an upper casing half (13a) and a lower casing half (13b);
- attaching connecting flanges (19a, 19b) to the casing in a first step;
- attaching support elements (23) for the first means (20, 21, 21a, b) on an inner wall of the bleed air chamber (1b) in another step; and
- fastening the first means (20, 21, 21a, b) with the nozzles (22) fixedly arranged thereupon on the support elements (23) in a further step.

12. A gas turbine with an axial compressor according to one of claims 1 to 10.

## Patentansprüche

1. Axialverdichter (10) zum Verdichten von Luft, insbesondere für eine Gasturbine, welcher Axialverdichter (10) einen Rotor (11), der um eine Maschinenachse (27) drehbar ist und eine Vielzahl von Rotorblättern (14) hat, sowie ein Gehäuse (13, 13a, b) aufweist, das den Rotor (11) konzentrisch und in einem Abstand umgibt, welches Gehäuse (13, 13a, b) zusammen mit dem Rotor (11) einen ringförmigen Gaskanal (12) bildet und außerhalb des Gaskanals (12) mindestens eine im Wesentlichen ringförmige und konzentrische Nebenluftkammer (16) hat, wobei die Nebenluftkammer mindestens einen Nebenluftschlitz (17) aufweist, wobei der Schlitz in Funktionsverbindung mit dem Gaskanal (12) steht, wobei der Axialverdichter (10) mit mindestens einer Einspritzeinrichtung (18; 18', 18a, b) zum Einspritzen eines Fluids ausgestattet ist, welche mindestens eine Düse (22) aufweist, **dadurch gekennzeichnet, dass** die mindestens eine Düse (22) dafür konfiguriert ist, das Fluid über den Nebenluftschlitz (17) in den Gaskanal (12) zu einzuspritzen.

2. Axialverdichter nach Anspruch 1, **dadurch gekennzeichnet, dass** der Nebenluftschlitz (17) eine ringförmige und konzentrische Konstruktion aufweist, dass die Einspritzeinrichtung eine Anzahl von Düsen (22) hat, die über den Umfang des Nebenluftschlitzes (17) verteilt sind, um das Fluid in den Gaskanal (12) zuzuliefern und zu verteilen.

3. Axialverdichter nach Anspruch 1 oder 2, **dadurch gekennzeichnet, dass** mindestens eine Einspritzeinrichtung (18; 18', 18a, b) eine erste Einrichtung (20, 21, 21 a, b) zum Zuliefern und Verteilen des Fluids zu der Düse (22) aufweist, welche in der Nebenluftkammer (16) in Verbindung mit dem Nebenluftschlitz (17) angeordnet ist, und dass die erste Einrichtung (20, 21, 21a, b) einen Verbindungsflansch (19, 19a, b) hat, der an dem Gehäuse (13, 13a, b) befestigt ist, welcher die Einspritzeinrichtung von außerhalb mit dem Fluid versorgt.

4. Axialverdichter nach einem der Ansprüche 1 bis 3, **dadurch gekennzeichnet, dass** die Düsen (22) in dem Nebenluftschlitz (17) angeordnet sind.

5. Axialverdichter nach einem der Ansprüche 1 bis 4, **dadurch gekennzeichnet, dass** die Düsen (22) mit ihrer Düsenachse in Richtung der Maschinenachse (27) ausgerichtet sind und in der Strömungsrichtung dergestalt in einer aus der radialen Richtung gekippten Weise angeordnet sind, dass das Fluid gegen den Strom in dem Gaskanal (12) eingespritzt wird.

6. Axialverdichter nach einem der Ansprüche 1 bis 5, **dadurch gekennzeichnet, dass** die erste Einrichtung (20, 21, 21a, b) einen Rohrbogen (21, 21a, b) umfasst, der quer zu der Strömungsrichtung durch die Nebenluftkammer (16) verläuft und an welchem die Düsen (22) befestigt sind.

7. Axialverdichter nach Anspruch 6, **dadurch gekennzeichnet, dass** der Rohrbogen (21, 21a, b) an einer Innenwand der Nebenluftkammer (16) befestigt ist, und dass der Rohrbogen (21, 21a, b) mit dem Verbindungsflansch (19, 19a, b) über einen flexiblen Verbindungsschlauch (20) verbunden ist.

8. Axialverdichter nach einem der Ansprüche 1 bis 7, **dadurch gekennzeichnet, dass** das Gehäuse (13) in einer horizontalen Teilungsebene in eine obere Gehäusehälfte (13a) und eine untere Gehäusehälfte (13b) geteilt ist, dass die Einspritzeinrichtung (18; 18', 18a, b) dem Gehäuse (13) entsprechend in eine obere Einspritzeinrichtung (18a) und eine untere Einspritzeinrichtung (18b) geteilt ist und dass ein separater Verbindungflansch (19a oder 19b) in jedem Fall der oberen Einspritzeinrichtung (18a) und der unteren Einspritzeinrichtung (18b) zugehörig ist.

9. Axialverdichter nach Anspruch 8, **dadurch gekennzeichnet, dass** die erste Einrichtung (20, 21, 21a, b) in jedem Fall einen halbkreisförmigen Rohrbogen (21a, b) für die obere Einspritzeinrichtung (18a) und für die untere Einspritzeinrichtung (18b) aufweist, der quer zur Strömungsrichtung durch die Nebenluftkammer (16) verläuft und an welchem die Düsen (22) befestigt sind.

10. Axialverdichter nach einem der Ansprüche 1 bis 9, **dadurch gekennzeichnet, dass** eine Vielzahl von Einspritzeinrichtungen (18, 18') derselben Bauart in Reihe in der Axialrichtung angeordnet sind.

11. Verfahren zur Herstellung eines Axialverdichters nach den Ansprüchen 8 oder 9, enthaltend die folgenden Schritte:
- Bereitstellen eines Gehäuses (13), welches an einer horizontalen Trennlinie in eine obere Gehäusehälfte (13a) und eine untere Gehäusehälfte (13b) geteilt ist;
- Anbringen von Verbindungsflanschen (19a, 19b) an dem Gehäuse in einem ersten Schritt;
- Anbringen von Halteelement (23) für die erste Einrichtung (20, 21, 21a, b) an einer Innenwand der Nebenluftkammer (16) in einem weiteren Schritt; und
- Befestigen der ersten Einrichtung (20, 21, 21a, b) mit den fest daran angeordneten Düsen (22) an den Halteelementen (23) in einem weiteren Schritt.

12. Gasturbine mit einem Axialverdichter nach einem der Ansprüche 1 bis 10.

## Revendications

1. Compresseur axial (10) destiné à comprimer de l'air, plus particulièrement pour une turbine à gaz, ledit compresseur axial (10) comprenant un rotor (11), qui peut tourner autour d'un axe de machine (27), qui possède une multiplicité de pales de rotor (14) et un carter (13, 13a, b) qui entoure le rotor (11) de manière concentrique et à une certaine distance, ledit carter (13, 13a, b), avec le rotor (11), formant un passage de gaz annulaire (12), et, à l'extérieur du passage de gaz (12), possède au moins une chambre d'air prélevé essentiellement annulaire et concentrique (16), la chambre d'air prélevé ayant au moins une fente d'air prélevé (17), la fente étant en communication avec le passage de gaz (12), le compresseur axial (10) étant équipé d'au moins un dispositif d'injection (18 ; 18', 18a, b) destiné à injecter un fluide, qui comprend au moins une buse (22), **caractérisé en ce que** la buse au moins (22) est configurée pour injecter le fluide dans le passage de gaz (12) par le biais de la fente d'air prélevé (17).

2. Compresseur axial selon la revendication 1, **caractérisé en ce que** la fente d'air prélevé (17) est annulaire et concentrique, **en ce que** le dispositif d'injection possède un certain nombre de buses (22) qui sont réparties sur la circonférence de la fente d'air prélevé (17) afin de fournir et de distribuer le fluide au passage de gaz (12).

3. Compresseur axial selon la revendication 1 ou 2, **caractérisé en ce qu'**au moins un dispositif d'injection (18 ; 18', 18a, b) comprend un premier moyen (20, 21, 21a, b) destiné à fournir et à distribuer le fluide à la buse (22) qui est placée dans la chambre d'air prélevé (16) associée à la fente d'air prélevé (17), et **en ce que** le premier moyen (20, 21, 21a, b) possède une bride de raccordement (19, 19a, b) fixée sur le carter (13, 13a, b), qui fournit au dispositif d'injection le fluide qui provient de l'extérieur.

4. Compresseur axial selon l'une des revendications 1 à 3, **caractérisé en ce que** les buses (22) sont placées dans la fente d'air prélevé (17).

5. Compresseur axial selon l'une des revendications 1 à 4, **caractérisé en ce que** les buses (22) sont orientées avec leur axe tourné vers l'axe de la machine (27), et, dans la direction d'écoulement, sont placées de manière inclinée par rapport à la direction radiale, de sorte que le fluide soit injecté contre l'écoulement dans le passage de gaz (12).

6. Compresseur axial selon l'une des revendications 1 à 5, **caractérisé en ce que** le premier moyen (20, 21, 21a, b) comprend un coude de tube (21, 21a, b) qui s'étend dans la chambre d'air prélevé (16) de manière transversale à la direction d'écoulement, et sur lequel sont fixées les buses (22).

7. Compresseur axial selon la revendication 6, **caractérisé en ce que** le coude de tube (21, 21a, b) est fixé sur une paroi intérieure de la chambre d'air prélevé (16), et **en ce que** le coude de tube (21, 21a, b) est relié à la bride de raccordement (19, 19a, b) par le biais d'un tuyau de raccordement flexible (20).

8. Compresseur axial selon l'une des revendications 1 à 7, **caractérisé en ce que** le carter (13) est séparé, sur un plan de séparation horizontal, en une moitié supérieure de carter (13a) et une moitié inférieure de carter (13b), **en ce que** le dispositif d'injection (18 ; 18', 19a, b) est séparé, en correspondance avec le carter (13), en un dispositif d'injection supérieur (18a) et un dispositif d'injection inférieur (18b), et **en ce qu'**un bride de raccordement distincte (19a ou 19b) est associée, dans chaque cas, au dispositif d'injection supérieur (18a) et au dispositif d'injection inférieur (18b).

9. Compresseur axial selon la revendication 8, **caractérisé en ce que** le premier moyen (20, 21, 21a, b) comprend, dans chaque cas, un coude de tube semi-circulaire (21a, b) destiné au dispositif d'injection supérieur (18a) et au dispositif d'injection inférieur (18b), qui s'étend dans la chambre d'air prélevé (16) transversalement à la direction d'écoulement, et sur lequel sont fixées les buses (22).

10. Compresseur axial selon l'une des revendications 1 à 9, **caractérisé en ce qu'**une pluralité de dispositifs d'injection (18, 18') du même type est placée en série dans la direction axiale.

11. Procédé de fabrication d'un compresseur axial selon les revendications 8 ou 9, qui comprend les étapes suivantes :
- le fait de prévoir un carter (13) qui est séparé, sur une ligne de séparation horizontale, en une moitié supérieure de carter (13a) et une moitié inférieure de carter (13b) ;
- la fixation de brides de raccordement (19a, 19b) sur le carter, à une première étape ;
- la fixation d'éléments de support (23) pour le premier moyen (20, 21, 21a, b) sur une paroi intérieure de la chambre d'air prélevé (16) à une autre étape ; et
- la fixation du premier moyen (20, 21, 21a, b) avec les buses (22) prévues dessus de manière fixe, sur les éléments de support (23) à une autre étape.

12. Turbine à gaz munie d'un compresseur axial selon l'une des revendications 1 à 10.
